# EUROPEAN PATENT APPLICATION

(11) **EP 2 953 089 A1**
(43) Date of publication of application: **09.12.2015**
(21) Application number: 15169858.6
(22) Date of filing: 29.05.2015
(51) Int. Cl.: G06Q 50/28, G06Q 10/06, G06Q 10/08, G06Q 10/10

(54) **SECURED DATA EXCHANGE WITH EXTERNAL USERS**

(30) Priority: 05.06.2014 IN KO06162014; 12.09.2014 US 201414485380
(71) Applicant: Siemens Product Lifecycle Management Software Inc., Plano, TX 75024-6612 (US)
(72) Inventor: VARSHNEY, Vaibhav, 411021 Bavdhan (IN); PANJWANI, Chandar, 411017 Pimpri (IN); KULKARNI, Vasant, 411045 Mahalunge (IN); KISHORE, Kunal, 411057 Kalewadi Phata (IN)
(74) Representative: Isarpatent

(57) **Abstract**

A method for controlling access to enterprise objects (270) for an external user. The method includes receiving a search request from an external SRM (210) for access to an enterprise object (270) in an enterprise system (250), evaluating an enterprise rule tree (280) to determine access and editing privileges granted to an external user accessor (260) for the enterprise object (270), granting the access and editing privileges to the external user accessor (260) based upon the enterprise rule tree (280), and sending the enterprise object (270) as external user data (240) to the SRM (210) when the enterprise rule tree (280) authenticates the external user accessor (260).

## Description

### TECHNICAL FIELD

The present disclosure is directed, in general, to computer-aided design ("CAD"), visualization, and manufacturing systems, product lifecycle management ("PLM") systems, and similar systems, that manage data for products and other items (collectively, "Product Data Management" systems or PDM systems).

### BACKGROUND OF THE DISCLOSURE

PDM systems manage PLM and other data. Improved systems are desirable.

### SUMMARY OF THE DISCLOSURE

Various disclosed embodiments include a method for controlling access to enterprise objects for an external user. The method includes receiving a search request from a supplier relationship management (SRM) for access to an enterprise object in an PLM system, evaluating an enterprise rule tree to determine access and editing privileges granted to an external user accessor for the enterprise object, granting the access and editing privileges to the external user accessor based upon the enterprise rule tree, and sending the enterprise object as external user data to the SRM when the enterprise rule tree authenticates the external user accessor.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
FIGURE 1 depicts a block diagram of a data processing system in which an embodiment can be implemented;
FIGURE 2 illustrates an external user accessor implemented in an enterprise system in accordance with the present disclosure.
FIGURE 3 illustrates a flow chart for accessing data in a model using an external user accessor method in accordance with the present disclosure.

### DETAILED DESCRIPTION

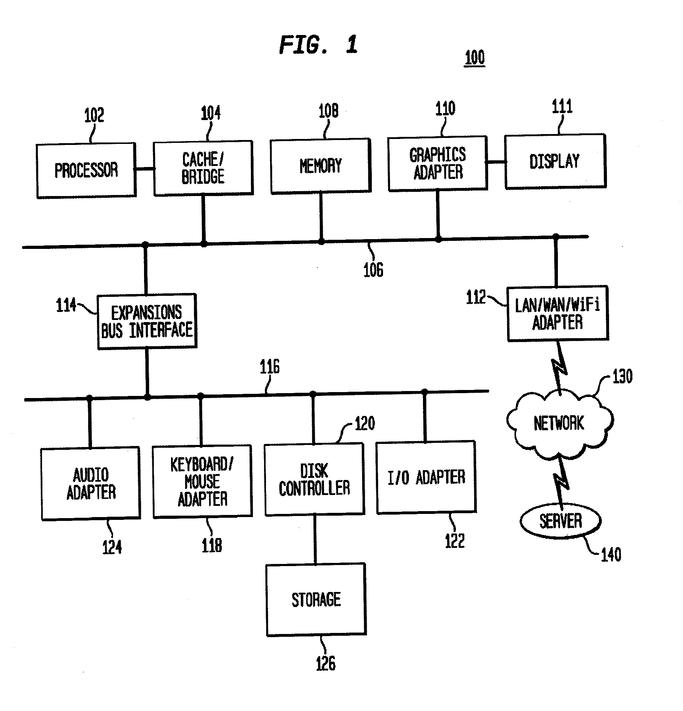

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

It is important that the enterprise system controls the access of the data for external user, when the enterprise system is exchanging the design information with disconnected external users. Data security and access are important so that no two external users can see each other's data and all the security definitions in the PLM system are honored. Due to the need to exchange data with disconnected external users, data authorization systems need to be adapted to situations where end users are unknown. A new external user accessor object is created for the unknown external user to be granted access privileges without being authenticated users and the data authorization system is modified to allow the unknown external user to use the external user accessor object to gain access to the data.

Figure 1 depicts a block diagram of a data processing system in which an embodiment can be implemented, for example, as a PLM system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

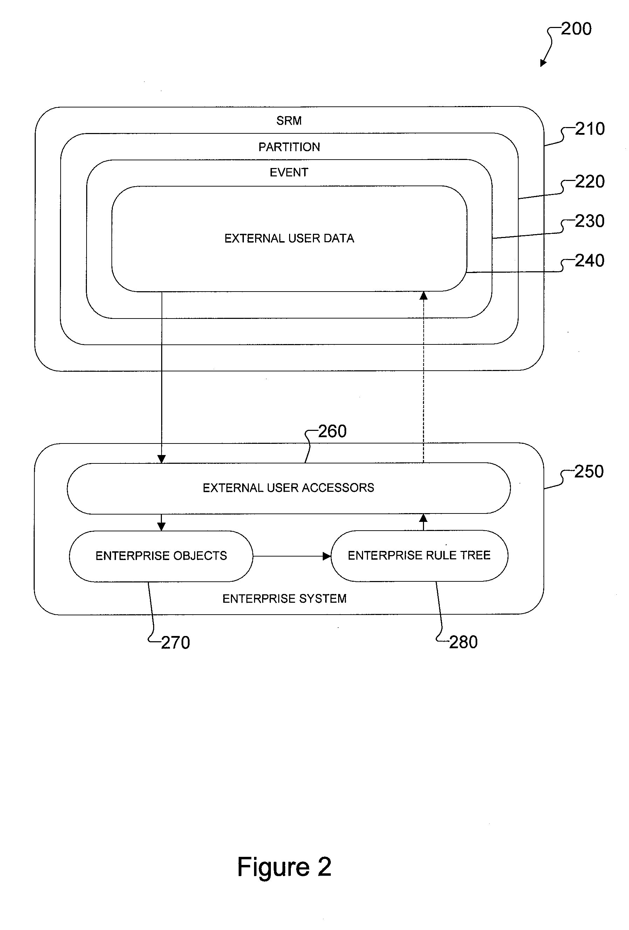

FIGURE 2 illustrates an external user accessor 250 implemented in a PLM system 200 in accordance with the present disclosure.

The supplier relationship management (SRM) 210 controls the interaction between the external user and the protected enterprise system 250. An external user is a user who does not have authenticated access to the PLM system, but nonetheless requires access to specific component data. The external user accesses the SRM 210 from a remote location on any type of platform. In one embodiment, the external user can use a web browser to access the SRM 210.

The partition 220 and the event 230 compartmentalize the data for an enterprise system 250 and the external user data 240 that is shared with the external user. The partition 220 is a logical independent space for managing enterprise data. Each partition 220 is independent of other partitions and the external user's access to a particular partition 220 provides no access or visibility to the other partitions. Each partition 220 contains events 230, where an event 230 holds external user data 240 for a specific exchange with external users. The external user data 240 is a copy of the enterprise object 270 data.

The enterprise objects 270 are assigned to specific external users and transmitted to the external user as external user data 240. The next level of access refinement can be done by assigning specific external user data 240 in the event 230 to specific external users. An external user can access and respond only to the external user data 240 to which the external user is assigned and is not aware of the other data in the event 230 shared with other external users.

The event 230 provides time bound access to the external user data 240 in the event 230. When the external user fails to access or respond to the external user data 240 in the specified amount of time or before the scheduled time, the external user's access to the data is removed.

The external user accessors 260 are created to provide access to enterprise objects to unknown external users and are used to define the rules to control the external user's access to the protected data. The external user accessors 260 are created before the external user can gain access to the enterprise objects 270 in the enterprise system 250. The external user accessors 260 assign specific access rules for enterprise objects which are evaluated using the enterprise rule tree 280.

The enterprise system 250 holds all the enterprise objects 270, external user accessors 260, and enterprise rule tree 280. The enterprise objects 270 are objects incorporated into different models that are created by external users.

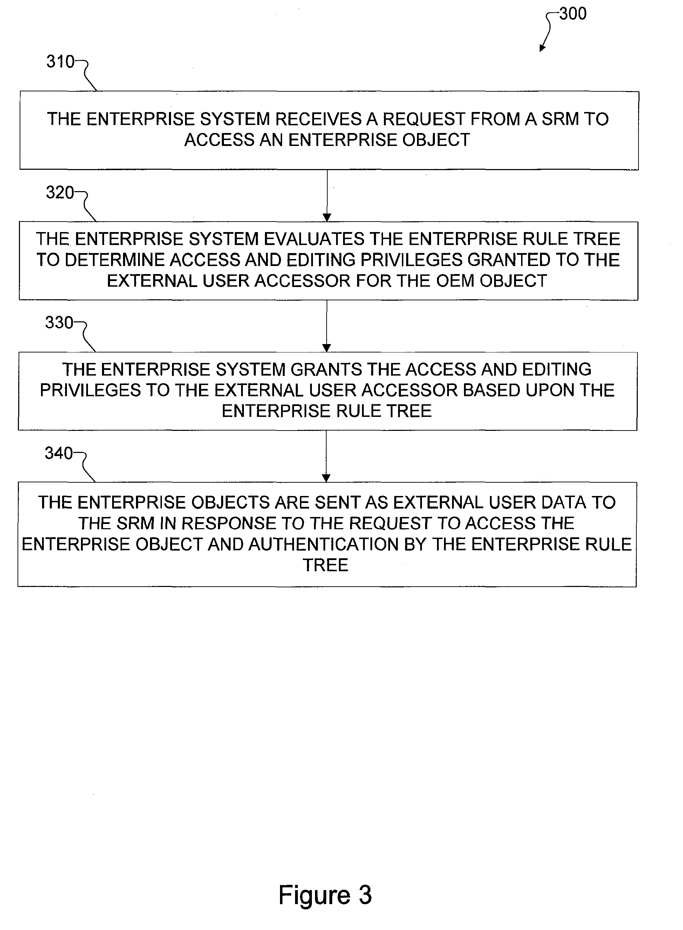

FIGURE 3 illustrates a flowchart for accessing data in a model using an external user accessor method 300 in accordance with the present disclosure.

In step 310, the enterprise system 250 receives a request from an SRM 210 to access an enterprise object 270. The request includes the external user's credentials, the desired enterprise object 270 to be accessed, and any other suitable information required for the enterprise system 250 to respond to a request for authorization of an external user's access of an enterprise object 270.

In step 320, the enterprise system 250 evaluates the enterprise rule tree 280 to determine access and editing privileges granted to the external user accessor 260 for the enterprise object 270.

In step 330, the enterprise system 250 grants the privilege (read, write, etc.) to the external user accessor 260 based upon the enterprise rule tree 280. The enterprise system 250 determines whether the external user accessor 260 provides the external user with access to the enterprise object 270. The SRM 260 also provides time bound access to the enterprise object 270, which determines the amount of time or event close time for the external user to have access to the enterprise objects 270. When the amount of time or event close time occurs, the event terminates access to the external user data.

In step 340, the enterprise objects 270 are sent as external user data 240 to the SRM 210 in response to the request to access the enterprise object 270 and authentication by the enterprise rule tree 280. If the enterprise rule tree does not authenticate the external user accessor 260, the SRM 210 is denied access to the enterprise object 270.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke paragraph six of 35 USC §112 unless the exact words "means for" are followed by a participle.

### FURTHER EMBODIMENTS

1. A method for controlling access to enterprise objects (270) for an external user comprising:
   receiving a search request from an external supplier relationship manager (SRM) (210) for access to an enterprise object (270) in an enterprise system (250);
   evaluating an enterprise rule tree (280) to determine access and editing privileges granted to an external user accessor (260) for the enterprise object (270);
   granting the access and editing privileges to the external user accessor (260) based upon the enterprise rule tree (280); and
   sending the enterprise object (270) as external user data (240) to the external SRM (210) in response to the request to access the enterprise object (270) and authentication by the enterprise rule tree (280).
2. The method for controlling access to enterprise objects (270) for an external user of embodiment 1, wherein the external user data (240) is contained in a partition (220).
3. The method for controlling access to enterprise objects (270) for an external user of embodiment 2, wherein the partition (220) is independent from other partitions (220) and access to a particular partition (220) provides no access to other partitions (220).
4. The method for controlling access to enterprise objects (270) for an external user of embodiment 2, wherein the external user data (240) is further contained in an event (230) and the event (230) is contained inside the partition (220).
5. The method for controlling access to enterprise objects (270) for an external user of embodiment 4, wherein the event (230) provides access to specific external user data (240) to the external user, but not to other data in the event (230).
6. The method for controlling access to enterprise objects (270) for an external user of embodiment 4, wherein the event (230) has a limited amount of time for access to the external user data (240) by the external user.
7. The method for controlling access to enterprise objects (270) for an external user of embodiment 6, wherein the limited amount of time is based on a specific amount of time or a specific time in which the access is terminated.
8. A data processing system (100) comprising:
   a processor (102); and
   an accessible memory (108), the data processing system (100) particularly configured to
      receive a search request from an external SRM (210) for access to an enterprise object (270) in an enterprise system (250);
      evaluate an enterprise rule tree (280) to determine access and editing privileges granted to an external user accessor (260) for the enterprise object (270);
      grant the access and editing privileges to the external user accessor (260) based upon the enterprise rule tree (280); and
      send the enterprise object (270) as external user data (240) to the external SRM (210) in response to the request to access the enterprise object (270) and authentication by the enterprise rule tree (280).
9. The data processing system (100) of embodiment 8, wherein the external user data (240) is contained in a partition (220).
10. The data processing system (100) of embodiment 9, wherein the partition (220) is independent from other partitions (220) and access to a particular partition (220) provides no access to other partitions (220).
11. The data processing system (100) of embodiment 9, wherein the external user data (240) is further contained in an event (230) and the event (230) is contained inside the partition (220).
12. The data processing system (100) of embodiment 11, wherein the event (230) provides access to specific external user data (240) to an external user, but not to other data in the event (230).
13. The data processing system (100) of embodiment 11, wherein the event (230) has a limited amount of time for access to the external user data (240) by an external user.
14. The data processing system (100) of embodiment 13, wherein the limited amount of time is based on a specific amount of time or a specific time in which the access is terminated.
15. A non-transitory computer-readable medium encoded with executable instructions that, when executed, cause one or more data processing systems to:
   receive a search request from an external SRM (210) for access to an enterprise object (270) in an enterprise system (250);
   evaluate an enterprise rule tree (280) to determine access and editing privileges granted to an external user accessor (260) for the enterprise object (270);
   grant the access and editing privileges to the external user accessor (260) based upon the enterprise rule tree (280); and
   send the enterprise object (270) as external user data (240) to the external SRM (210) in response to the request to access the enterprise object (270) and authentication by the enterprise rule tree (280).
16. The non-transitory computer-readable medium of embodiment 15, wherein the external user data (240) is contained in a partition (220).
17. The non-transitory computer-readable medium of embodiment 16, wherein the partition (220) is independent from other partitions (220) and access to a particular partition (220) provides no access to other partitions (220).
18. The non-transitory computer-readable medium of embodiment 16, wherein the external user data (240) is further contained in an event (230) and the event (230) is contained inside the partition (220).
19. The non-transitory computer-readable medium of embodiment 18, wherein the event (230) provides access to specific external user data (240) to the external user, but not to other data in the event (230).
20. The non-transitory computer-readable medium of embodiment 18, wherein the event (230) has a limited amount of time for access to the external user data (240) by an external user.

## Claims

1. A method for controlling access to enterprise objects (270) for an external user comprising:
receiving a search request from an external supplier relationship manager (SRM) (210) for access to an enterprise object (270) in an enterprise system (250);
evaluating an enterprise rule tree (280) to determine access and editing privileges granted to an external user accessor (260) for the enterprise object (270);
granting the access and editing privileges to the external user accessor (260) based upon the enterprise rule tree (280); and
sending the enterprise object (270) as external user data (240) to the external SRM (210) in response to the request to access the enterprise object (270) and authentication by the enterprise rule tree (280).

2. The method of claim 1, wherein the external user data (240) is contained in a partition (220).

3. The method of claim 2, wherein the partition (220) is independent from other partitions (220) and access to a particular partition (220) provides no access to other partitions (220).

4. The method of claim 2 or 3, wherein the external user data (240) is further contained in an event (230) and the event (230) is contained inside the partition (220).

5. The method of claim 4, wherein the event (230) provides access to specific external user data (240) to the external user, but not to other data in the event (230).

6. The method of claim 4 or 5, wherein the event (230) has a limited amount of time for access to the external user data (240) by the external user.

7. The method of claim 6, wherein the limited amount of time is based on a specific amount of time or a specific time in which the access is terminated.

8. A data processing system (100) comprising:
a processor (102); and
an accessible memory (108), the data processing system (100) particularly configured to
receive a search request from an external SRM (210) for access to an enterprise object (270) in an enterprise system (250);
evaluate an enterprise rule tree (280) to determine access and editing privileges granted to an external user accessor (260) for the enterprise object (270);
grant the access and editing privileges to the external user accessor (260) based upon the enterprise rule tree (280); and
send the enterprise object (270) as external user data (240) to the external SRM (210) in response to the request to access the enterprise object (270) and authentication by the enterprise rule tree (280).

9. The data processing system of claim 8, wherein the external user data (240) is contained in a partition (220).

10. The data processing system of claim 9, wherein the partition (220) is independent from other partitions (220) and access to a particular partition (220) provides no access to other partitions (220).

11. The data processing system of claim 9 or 10, wherein the external user data (240) is further contained in an event (230) and the event (230) is contained inside the partition (220).

12. The data processing system of claim 11, wherein the event (230) provides access to specific external user data (240) to an external user, but not to other data in the event (230).

13. The data processing system of claim 11 or 12, wherein the event (230) has a limited amount of time for access to the external user data (240) by an external user.

14. The data processing system of claim 13, wherein the limited amount of time is based on a specific amount of time or a specific time in which the access is terminated.

15. A non-transitory computer-readable medium encoded with executable instructions that, when executed, cause one or more data processing systems to execute a method according to any of the claims 1 to 7.
